# EUROPÄISCHE PATENTSCHRIFT

(11) **EP 1 706 910 B1**
(45) Veröffentlichungstag und Bekanntmachung des Hinweises auf die Patenterteilung: **24.02.2016**
(21) Anmeldenummer: 04802798.1
(22) Anmeldetag: 23.11.2004
(51) Int. Cl.: H01M 2/02, H01M 2/20, H01M 2/34, H01M 2/04

(54) **PRISMATISCHER AKKUMULATOR UND VERFAHREN ZUR HERSTELLUNG DESSELBEN**
PRISMATIC BATTERY AND METHOD FOR PRODUCING THE LATTER
ACCUMULATEUR PRISMATIQUE ET PROCEDE DE FABRICATION

(30) Priorität: 21.01.2004 DE 102004003066
(43) Veröffentlichungstag der Anmeldung: 04.10.2006
(73) Patentinhaber: Johnson Controls Hybrid and Recycling GmbH, 30419 Hannover (DE)
(72) Erfinder: BECHTOLD, Dieter, 61118 Bad Vilbel (DE); JOSWIG, Ralf, 29690 Buchholz (DE); PELZ, Kai, 31832 Springe (DE)
(74) Vertreter: Trinks, Ole
(86) Internationale Anmeldenummer: PCT/DE2004/002587
(87) Internationale Veröffentlichungsnummer: WO 2005/071774

(56) Entgegenhaltungen:
- EP-A- 1 059 680
- EP-A- 1 091 427
- EP-A- 1 093 170
- US-A1- 2003 027 040
- PATENT ABSTRACTS OF JAPAN Bd. 2003, Nr. 08, 6. August 2003 (2003-08-06) & JP 2003 123730 A (MATSUSHITA ELECTRIC IND CO LTD; TOYOTA MOTOR CORP), 25. April 2003 (2003-04-25)

## Beschreibung

Die Erfindung betrifft einen prismatischen Akkumulator mit einem Gehäuse, dass eine Mehrzahl von durch elektrisch isolierende Zwischenwände voneinander abgedichtet getrennte Zellgefäße hat, und mit aus gestapelten Elektrodenplatten gebildeten Plattenstapeln, wobei in jedem der Zellgefäße ein Plattenstapel aufgenommen ist.

Die Erfindung betrifft weiterhin ein Verfahren zur Herstellung eines solchen prismatischen Akkumulators.

Prismatische Akkumulatoren sind hinreichend bekannt und bestehen aus einer Mehrzahl von in einem gemeinsamen Gehäuse nebeneinander angeordneten verkapselten Batteriezellen, die jeweils aus gestapelten Elektrodenplatten gebildet und mit Elektrolyt gefüllt sind.

Ein typischer herkömmlicher prismatischer Akkumulator ist in der EP 1 087 449 A1 offenbart. Die eine Vielzahl von gestapelten Elektrodenplatten aufweisenden Batteriezellen werden bei geöffnetem Deckel von oben in zugeordnete Gefäße eines Gehäuses eingeführt. Die Zellgefäße werden hierbei durch elektrisch isolierende Zwischenwände gebildet. An den gegenüberliegenden Seiten der Batteriezellen, die an die Zwischenwände angrenzen, sind Ableiterbleche vorgesehen, die jeweils mit den positiven bzw. negativen Elektrodenplatten verschweißt sind. Die Ableiterbleche werden in einen Totraum des Gehäuses im Bereich des Deckels nach oben geführt und dort mit dem angrenzenden Ableiterblech zur Herstellung einer elektrischen Verbindung verschweißt.

Zur Verkürzung der stromleitenden Pfade wird in der WO 03/015194 A1 vorgeschlagen, an der Frontseite in Aussparungen des Gehäuses Kontaktverbinderelemente mit den jeweils an den gegenüberliegenden Seiten einer Zwischenwand angeordneten Ableiterblechen angrenzender Batteriezellen zu verschweißen.

Aufgabe der Erfindung ist es, einen verbesserten prismatischen Akkumulator zu schaffen, der einen möglichst geringen Innenwiderstand und durch verringerten Totraum eine höhere Packungsdichte aufweist.

Die Aufgabe wird mit dem gattungsgemäßen prismatischen Akkumulator erfindungsgemäß dadurch gelöst, dass sich entlang der Zwischenwände jeweils Kontaktverbinderbleche erstrecken, die sich an einer Zwischenwand gegenüberliegenden Kontaktverbinderbleche durch die Zwischenwand hindurch miteinander elektrisch leitend verbunden sind und die Kontakte der Plattenstapel mit den zugeordneten Kontaktverbinderblechen elektrisch leitend verbunden sind.

Durch die zusätzlichen Kontaktverbinderbleche ist es möglich, zunächst eine elektrische Durchkontaktierung angrenzender Kontaktverbinderbleche durch die jeweilige Zwischenwand hindurch herzustellen. Dadurch wird kein Totraum im Deckel für die Kontaktierung benötigt. Zudem wird eine annähernd direkte Verbindung der Kontaktverbinderbleche mit geringst möglichem Innenwiderstand geschaffen.

Nach Einführen der Plattenstapel in die Zellgefäße können die Kontakte der Plattenstapel dann mit den Kontaktverbinderblechen elektrisch leitend verbunden werden, beispielsweise durch Verschweißen, Verlöten oder Lötschweißen.

Zur weiteren Verringerung des Innenwiderstands ist es vorteilhaft, wenn die Kontaktverbinderbleche über ihre Länge mehrfach mit einem zugeordneten an der gegenüberliegenden Seite der Zwischenwand angeordneten Kontaktverbinderblech elektrisch verbunden sind. Ein besonders geringer Innenwiderstand lässt sich erreichen, wenn die elektrische Verbindung zugeordneter Kontaktverbinderbleche mit einem Durchsetzfügeverfahren durch Kalt-Flächenverpressen der zugeordneten Kontaktverbinderbleche hergestellt wird.

Die Kontakte der Plattenstapel werden bevorzugt als Ableiterbleche ausgeführt, wobei die Seitenkanten der positiven Elektrodenplatten eines Plattenstapels mit einem ersten Ableiterblech verschweißt und an dem gegenüberliegenden Ende des Plattenstapels die Seitenkanten der negativen Elektrodenplatten des Plattenstapels mit einem zweiten Ableiterblech verschweißt sind. Die Ableiterbleche werden dann vorzugsweise über die gesamte Länge mit den zugeordneten Kontaktverbinderblechen verschweißt.

Besonders vorteilhaft ist es, wenn die Kontakte der Plattenstapel mit den zugeordneten Kontaktverbinderblechen verschweißt und zudem an den Außenkanten der Schweißverbindung verlötet sind. Hierdurch lässt sich eine mechanisch hochfeste sowie elektrisch hochleitfähige und stromfeste Verbindung mit geringstem Innenwiderstand erzielen.

Eine einfache Konstruktion und Herstellung des prismatischen Akkumulators wird erreicht, wenn die Plattenstapel nicht wie herkömmlich von oben, sondern an der Frontseite des Gehäuses in die Zellgefäße eingesetzt werden. Dann liegen die Seitenkanten der Ableiterbleche und Kontaktverbinderbleche frei und können leicht zugänglich miteinander verschweißt und gegebenenfalls verlötet werden. Anschließend wird dann der Frontdeckel des Gehäuses auf die Seitenkanten der Zwischenwände und Seitenwände des Gehäuses aufgesetzt und damit dicht verschweißt, beispielsweise mittels bekannter Laser-Durchschweißverfahren.

Aufgabe der Erfindung ist es weiterhin, ein verbessertes Verfahren zur Herstellung eines prismatischen Akkumulators zu schaffen.

Die Aufgabe wird erfindungsgemäß gelöst durch die Schritte von:
- Erstellen einer elektrischen Verbindung zwischen jeweils an den gegenüberliegenden Seiten einer Zwischenwand angeordneten Kontaktverbinderblechen durch die Zwischenwand hindurch;
- Anordnen von Plattenstapeln in die durch die Zwischenwände gebildeten Zellgefäße;
- Verschweißen der elektrischen Kontakte der Plattenstapel mit den Kontaktverbinderblechen; und
- Verschließen des Gehäuses derart, dass die Zellgefäße und das Gehäuse abgedichtet sind.

Die Erfindung wird nachfolgend anhand der beigefügten Zeichnungen näher erläutert. Es zeigen:
- Figur 1 -: perspektivische Darstellung eines erfindungsgemäßen prismatischen Akkumulators;
- Figur 2 -: perspektivische Darstellung eines Plattenstapels mit gestapelten Elektrodenplatten und Ableiterblechen;

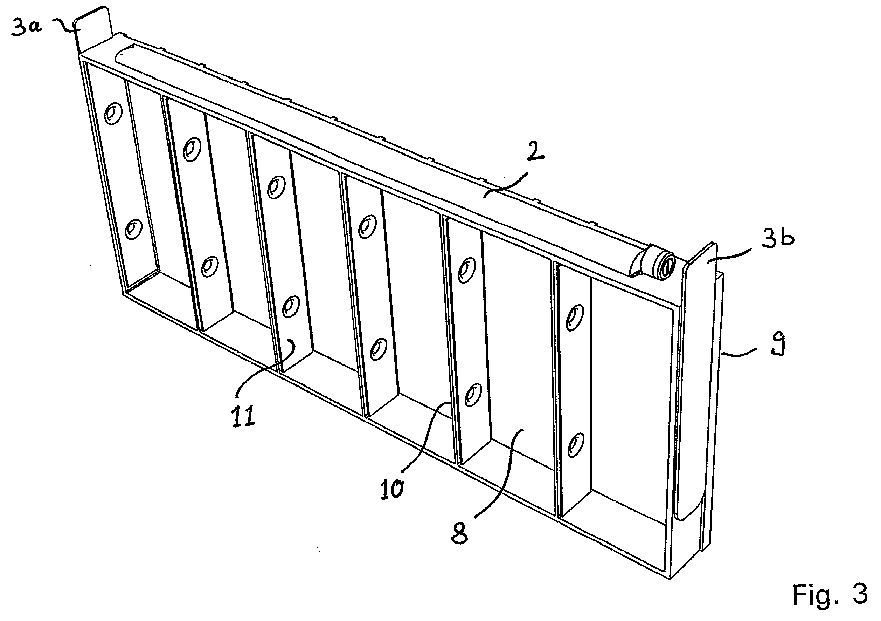

- Figur 3 -: perspektivische Darstellung des geöffneten Gehäuses des prismatischen Akkumulators aus Figur 1 ohne Frontplatte;
- Figur 4 -: perspektivische Darstellung des prismatischen Akkumulators aus Figur 1 mit in die Zellgefäße eingesetzten Plattenstapel ohne Frontplatte;
- Figur 5 -: perspektivische Darstellung einer zweiten Ausführungsform eines erfindungsgemäßen prismatischen Akkumulators;
- Figur 6 -: perspektivische Explosionsansicht des Gehäuses des prismatischen Akkumulators aus Figur 5;
- Figur 7 -: perspektivische Darstellung eines Plattenstapels mit einer zweiten Ausführungsform von Ableiterblechen;
- Figur 8 -: perspektivische Darstellung des Ableiterblechs aus Figur 7;
- Figur 9 -: perspektivische Darstellung eines Kontaktverbinderblechs;
- Figur 10-: Schnittansicht eins Ausschnitts des prismatischen Akkumulators aus Figur 5 im Bereich der Zwischenwände und der Verbindungen benachbarter Plattenstapel.

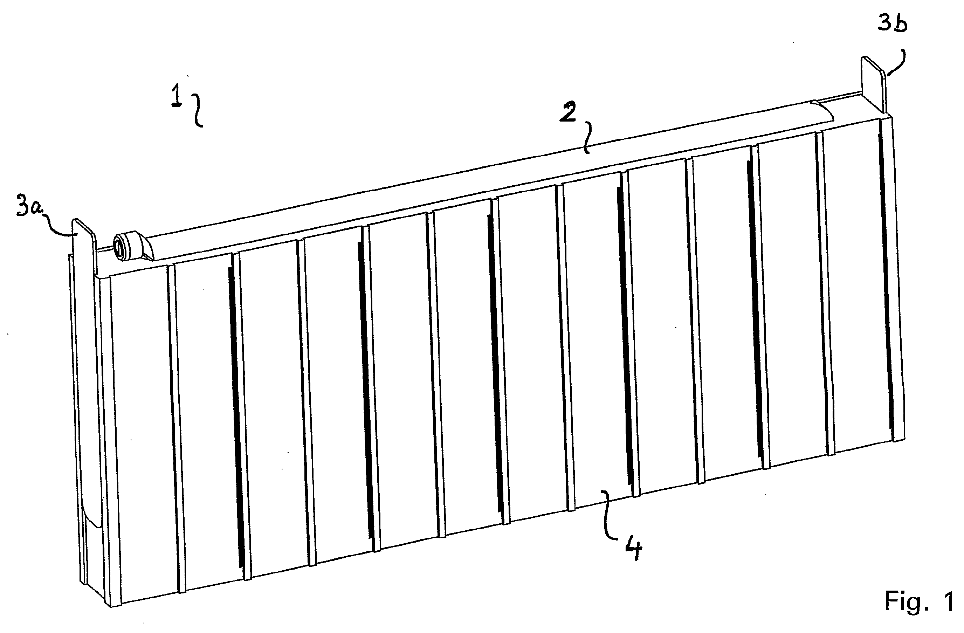

Die Figur 1 lässt einen prismatischen Akkumulator 1 in perspektivischer Ansicht erkennen. An der Oberseite des Gehäuses ist ein Entgasungskanal 2 aufgesetzt. Ferner sind an den sich gegenüberliegenden Schmalseiten des Gehäuses Anschlusskontakte 3a, 3b für den positiven und negativen Polanschluss des prismatischen Akkumulators 1 angebracht.

Das Gehäuse des Akkumulators 1 ist mit einem Frontdeckel 4 verschlossen, der auf das Gehäuse aufgesetzt und mit diesem dicht verschweißt ist.

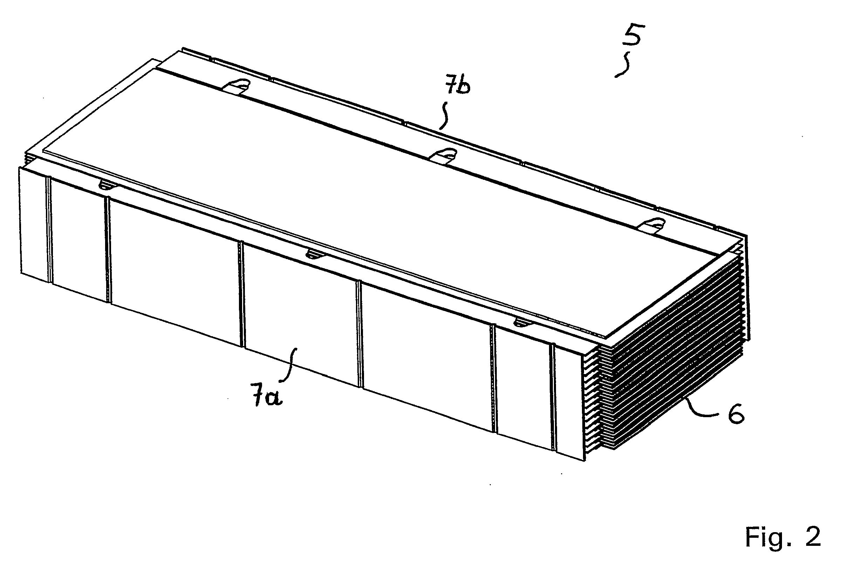

Die Figur 2 lässt einen Plattenstapel 5 in perspektivischer Ansicht erkennen. Es wird deutlich, dass eine Vielzahl alternierend übereinander gestapelter positiver und negativer Elektrodenplatten 6 den Plattenstapel 5 bilden. Die Anschlussfahnen der positiven Elektrodenplatten 6 sind auf einer Seite des Plattenstapels 5 nach außen geführt und dort mit einem Ableiterblech 7a mit Hilfe bekannter Laserdurchschweißverfahren elektrisch leitend und mechanisch verbunden. Die Anschlüsse der negativen Elektrodenplatten 6 sind auf der gegenüberliegenden Seite des Plattenstapels 5 in entsprechender Weise mit einem Ableiterblech 7b verbunden.

Derartige an sich bekannte Plattenstapel 5 (Batteriezellen) werden in Zellgefäße 8 eingebracht, die in dem Gehäuse 9 durch sich vom Boden zum Deckel des Gehäuses 9 erstreckende Zwischenwände 10 gebildet sind. Auf beiden Oberseiten der Zwischenwände 10 sind Kontaktverbinderbleche 11 vorgesehen, die sich über die gesamte Länge der Zwischenwände 10 erstrecken. Die sich an einer Zwischenwand 10 gegenüberliegenden Kontaktverbinderbleche 11 sind durch die Zwischenwand 10 hindurch miteinander kontaktiert. Dies erfolgt vorzugsweise mit Hilfe von Durchsetzfügeverfahren, indem die Kontaktverbinderbleche 11 im Bereich der Bohrung in den Zwischenwänden 10 ohne Zusatzwerkstoff kalt gefügt werden. In entsprechender Weise werden die Anschlusskontakte 3a, 3b mit den äußeren Kontaktverbinderblechen 11 an den Innenwänden der Schmalseiten des Gehäuses 9 verbunden.

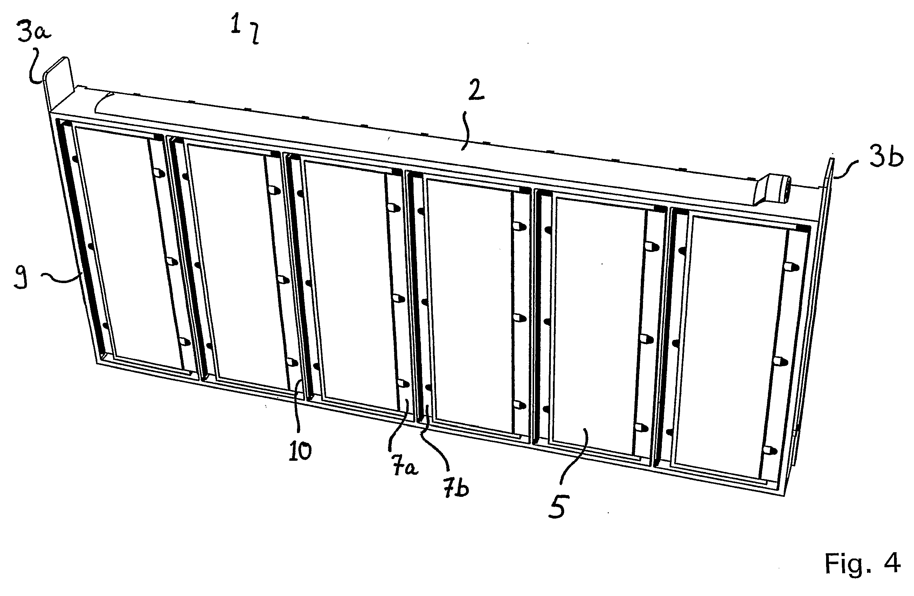

Wie aus der Figur 4 erkennbar ist, werden die Plattenstapel 5 in die Zellgefäße 8 des Gehäuses 9 eingesetzt. Dabei ist kein Totraum im oberen und unteren Bereich des Gehäuses 9 mehr erforderlich, da die Kontaktierung der Plattenstapel 5 miteinander über die Ableiterbleche 7 und Kontaktverbinderbleche 11 an der Längsseite der Plattenstapel 5 und nicht im Bereich des Deckels des Gehäuses 9 erfolgt.

Hierzu werden bei geöffnetem Gehäuse 9 ohne Frontdeckel 4 vorzugsweise über die gesamte Länge der freiliegenden Kanten der Ableiterbleche 7 und Kontaktverbinderbleche 11 die unmittelbar nebeneinander liegenden Ableiterbleche 7 und Kontaktverbinderbleche 11 miteinander verschweißt und/oder verlötet. Besonders vorteilhaft ist es, wenn eine Lötverbindung an der Außenkante der Schweißnaht bzw. des Ableiterblechs 7 und Kontaktverbinderblechs 11 angebracht wird.

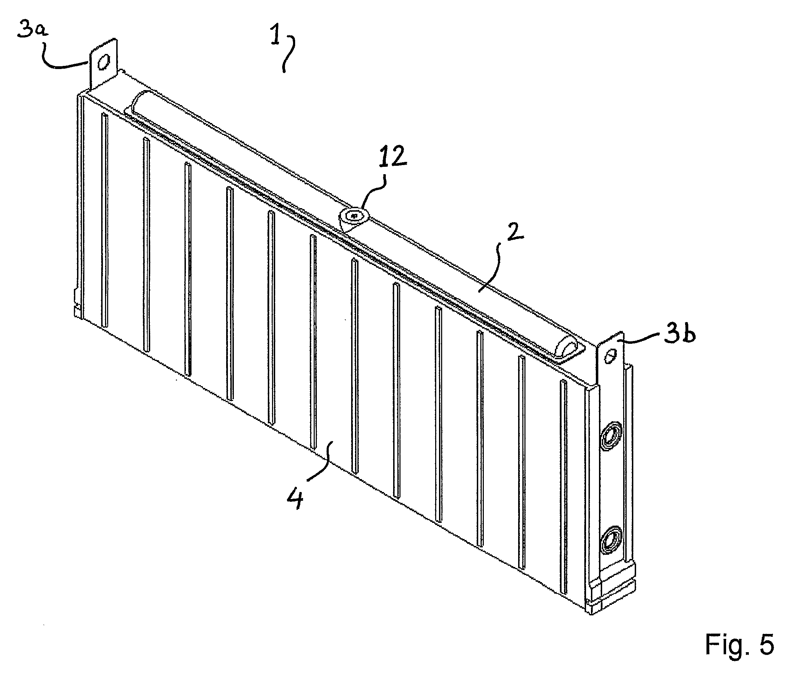

Die Figur 5 lässt eine zweite Ausführungsform eines prismatischen Akkumulators 1 in perspektivischer Ansicht erkennen. Es wird deutlich, dass die Anschlusskontakte 3 mit einem Durchsetzfügeverfahren mit dem zugeordneten innenliegenden Kontaktverbinderblech an zwei Stellen über die Höhe des Akkumulators 1 kalt-flächenverpresst ist. Zudem ist das Entgasungsventil 12 des Entgasungskanals nicht seitlich, wie in der ersten Ausführungsform aus der Figur 1, sondern zentriert im Entgasungskanal 2 vorgesehen.

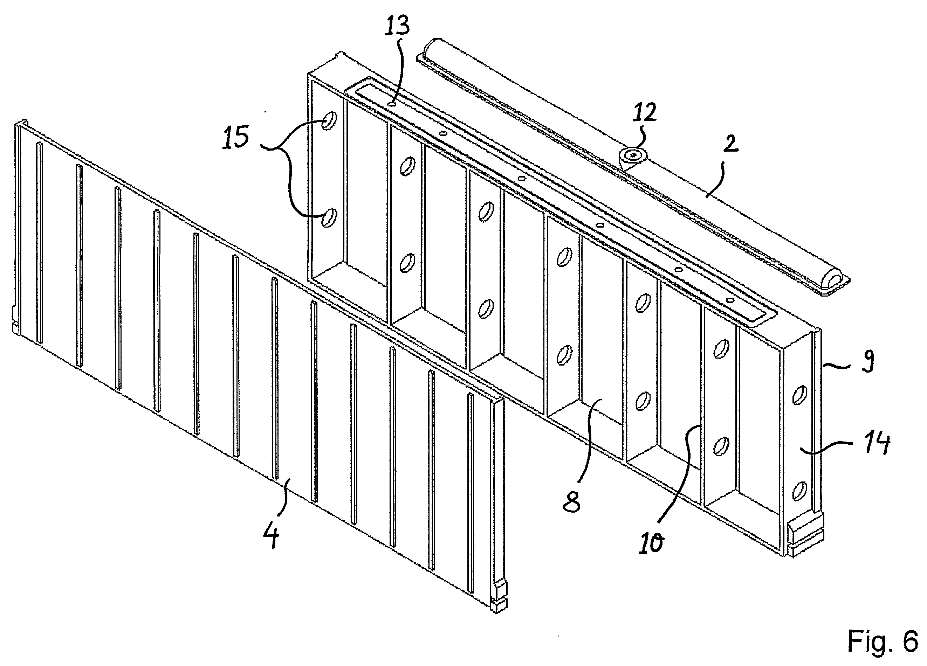

Die Figur 6 lässt eine Explosionsansicht des prismatischen Akkumulators 1 aus der Figur 5 erkennen. Es wird deutlich, dass der Entgasungskanal 2 auf die Oberseite des Gehäuses 9 aufgesetzt wird, in der für jedes Zellgefäß 8 Entgasungsbohrungen 13 eingebracht sind.

Weiterhin wird deutlich, dass an den äußeren Schmalseiten 14 des Gehäuses sowie den Zwischenwänden 10 jeweils 2 Bohrungen 15 vorgesehen sind, durch die angrenzende Kontaktverbinderbleche 11 miteinander bzw. an den Schmalseiten 14 Kontaktverbinderbleche 11 mit den Kontaktanschlüssen 3 elektrisch leitend unlösbar miteinander verbunden werden. Vorzugsweise wird hierfür ein Durchsetzfügeverfahren eingesetzt. Andere Verfahren, wie Schrauben, Nieten, Schweißen, Löten etc. sind jedoch auch möglich. Gegebenenfalls sind Dichtelemente, wie zum Beispiel O-Ringe oder eine Beschichtung zur Abdichtung der Bohrungen 15 nach Kontaktierung der Kontaktverbinderbleche 11 hervorgesehen.

Durch den Einsatz mehrerer Verbindungsstellen innerhalb der Bauhöhe der Kontaktverbinderbleche 11 wird der Innenwiderstand weiter reduziert.

Die Figur 6 lässt einen Plattenstapel 5 in perspektivischer Ansicht mit einer bevorzugten Ausführungsform von Ableiterblechen 7 erkennen. Diese werden mehreren Stellen in Querrichtung mit Hilfe eines Laserdurchschweißverfahrens mit den Kontaktfahnen zugeordneter Elektrodenplatten 6 verbunden.

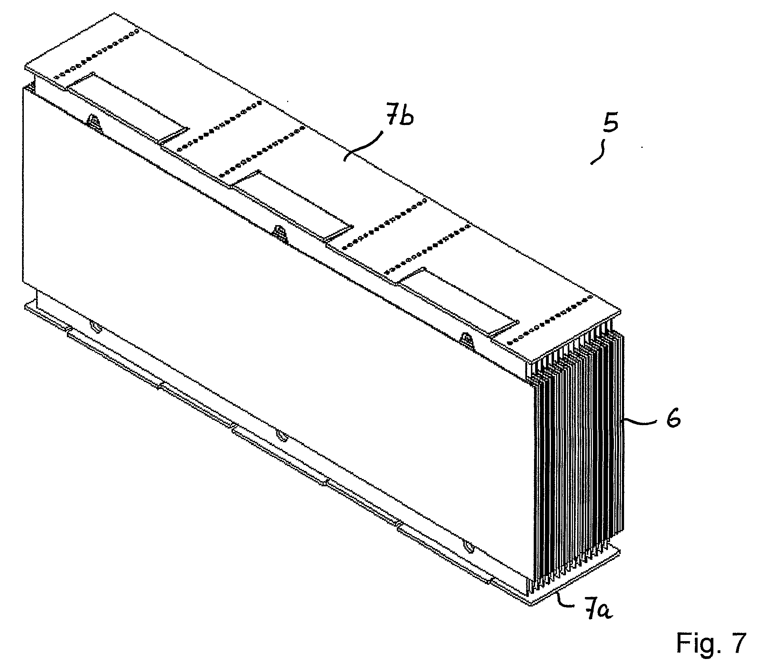

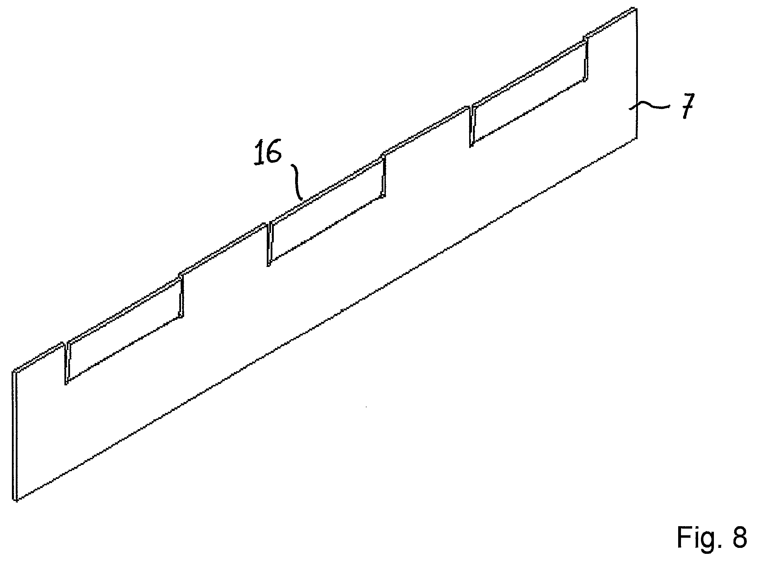

Wie aus der Figur 7 und der perspektivischen Detailansicht des Ableiterblechs 7 in der Figur 8 deutlicher erkennbar ist, hat die verbesserte Ausführungsform des Ableiterblechs 7 eingeschnittene, leicht abgewinkelte Verbindungsabschnitte 16. Diese Verbindungsabschnitte 16 liegen bei einem in das Zellgefäß 8 eingesetzten Plattenstapel 5 im Bereich der Gehäuseöffnung bei abgenommenen Frontdeckel 4. Beispielsweise sind über die Länge des Ableiterblechs 7 drei Verbindungsabschnitte 16 vorgesehen.

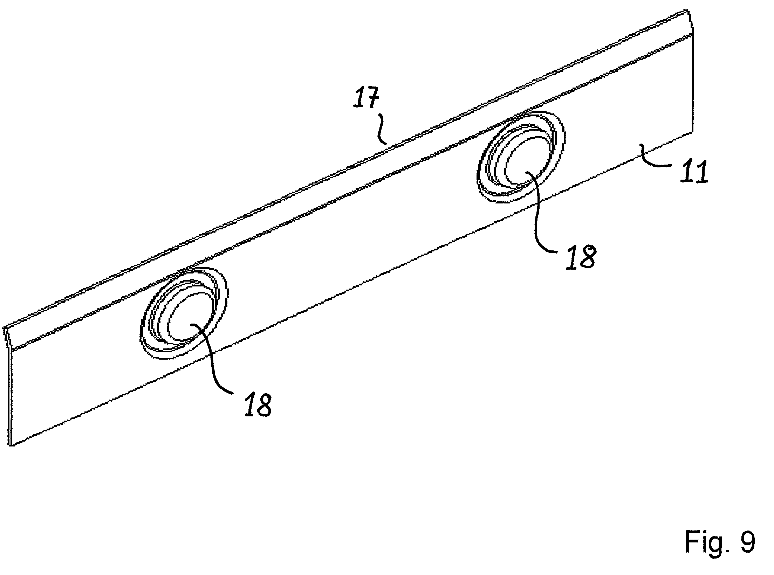

Die Figur 9 lässt eine bevorzugte Ausführungsform eines Kontaktverbinderblechs 11 erkennen, dass ebenfalls eine abgewinkelte Außenkante 17 hat, die im montierten Zustand des Akkumulators 1 an die Verbindungsabschnitte 16 des zugordneten Ableiterblechs 7 angrenzt.

Weiterhin ist erkennbar, dass im Bereich der Bohrungen 15 in den Zwischenwänden 10 zylinderförmige Kontaktabschnitte 18 mit umliegender Einsenkung vorgeformt sind. Durch Einführen von Presswerkzeugen in die zylinderförmigen Kontaktabschnitte 18 und Aufbringen einer hohen Presskraft kann eine unlösbare kaltgefügte Verbindung der Kontaktabschnitte 18 angrenzender Kontaktverbinderbleche 11 durch die Bohrung 15 in der zwischenliegenden Zwischenwand 10 hergestellt werden. Eine solche Verbindung hat einen sehr niedrigen Innenwiderstand.

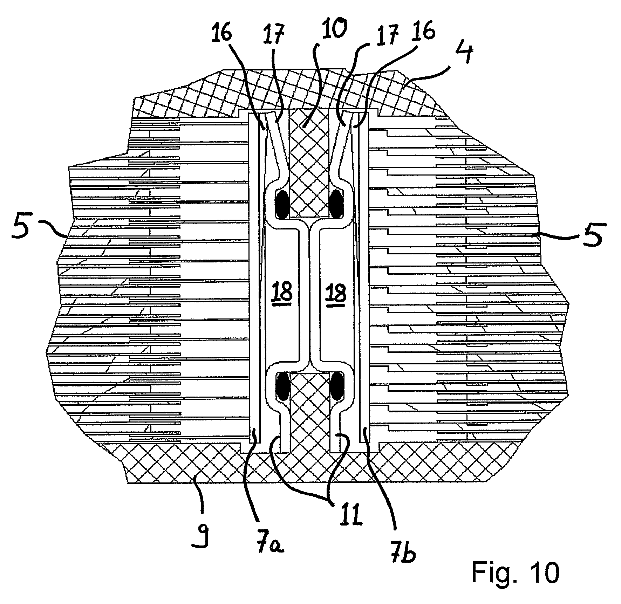

Die Figur 10 lässt eine Schnittansicht durch einen Ausschnitt des prismatischen Akkumulators 1 erkennen, der in den Figuren 5 bis 9 skizziert ist. Es ist ein Ausschnitt des Gehäuses im Bereich einer Zwischenwand 10 gezeigt, auf die ein Frontdeckel 4 zum Verschließen des Gehäuses 9 aufgesetzt ist. Der die Vorderseite des Gehäuses 9 abschließende Frontdeckel 4 befindet sich in der Darstellung oben.

Weiterhin ist zu erkennen, dass die Verbindungsabschnitte 16 der Ableiterbleche 7a, 7b der in die Zellgefäße 8 eingesetzten Plattenstapel 5 auf den angrenzenden Frontdeckel 4 ausgerichtet und von dem jeweiligen Plattenstapel 5 in Richtung der angrenzenden Zellenwand 10 abgewinkelt sind.

Erkennbar ist auch, dass die an beiden Seiten der Zwischenwand 10 angeordneten Kontaktverbinderbleche 11 mit den Kontaktabschnitten 18 durch die Zwischenwand 10 hindurch elektrisch miteinander verbunden sind. Die an den Frontdeckel 4 angrenzende Außenkante 17 der Kontaktverbinderbleche 11 erstreckt sich von der Zwischenwand 10 weg hin zu dem angrenzenden Ableiterblech 7. Die abgewinkelte Außenkante 17 eines Kontaktverbinderblechs 11 wird mit dem angrenzenden abgewinkelten Verbindungsabschnitt 16 des zugeordneten Ableiterblechs 7 verschweißt. Vorzugsweise erfolgt zudem noch eine Lötverbindung zwischen Kontaktverbinderblech 11 und zugeordnetem Ableiterblech 7 an den Außenkanten der Schweißverbindung.

## Patentansprüche

1. Prismatischer Akkumulator (1) mit einem Gehäuse (9), das eine Mehrzahl von durch elektrisch isolierende Zwischenwände (10) voneinander getrennte Zellgefäße (8) hat, und mit aus gestapelten Elektrodenplatten (6) gebildeten Plattenstapeln (5), wobei in jedem der Zellgefäße (8) ein Plattenstapel (5) aufgenommen ist, wobei sich entlang der Zwischenwände (10) jeweils Kontaktverbinderbleche (11) erstrecken, die sich an einer Zwischenwand (10) gegenüberliegenden Kontaktverbinderbleche (11) durch die Zwischenwand (10) hindurch miteinander elektrisch leitend verbunden sind und die Kontakte (7) der Plattenstapel (5) mit den zugeordneten Kontaktverbinderblechen (11) elektrisch leitend verbunden sind, **dadurch gekennzeichnet, dass** ein eine flächenmäßig größte Gehäuseseite des Gehäuses (9) abdeckender Frontdeckel (4) des Gehäuses (9) auf die Seitenkanten der Zwischenwände (10) und Seitenwände des Gehäuses (9) aufgesetzt und damit dicht verschweißt ist.

2. Prismatischer Akkumulator (1) nach Anspruch 1, **dadurch gekennzeichnet, dass** die Kontaktverbinderbleche (11) über ihre Länge mehrfach mit einem zugeordneten an der gegenüberliegenden Seite der Zwischenwand (10) angeordneten Kontaktverbinderblech (11) elektrisch leitend verbunden sind.

3. Prismatischer Akkumulator (1) nach Anspruch 1 oder 2, **dadurch gekennzeichnet, dass** die elektrische Verbindung zugeordneter Kontaktverbinderbleche (11) eine kalt-flächenverpresste Durchsetzfügeverbindung ist.

4. Prismatischer Akkumulator (1) nach einem der vorhergehenden Ansprüche, **dadurch gekennzeichnet, dass** die Kontakte (7) der Plattenstapel (5) mit den zugeordneten Kontaktverbinderblechen (11) verschweißt sind und an den Außenkanten der Schweißverbindung Lötverbindungen sind.

5. Prismatischer Akkumulator (1) nach einem der vorhergehenden Ansprüche, **dadurch gekennzeichnet, dass** die Seitenkanten der positiven Elektrodenplatten (6) eines Plattenstapels (5) mit einem ersten Ableiterblech (7a) verschweißt und an dem gegenüberliegendem Ende des Batteriestapels die Seitenkanten der negativen Elektrodenplatten (6) des Plattenstapels (5) mit einem zweiten Ableiterblech (7b) verschweißt sind, und dass die Ableiterbleche (7a, 7b) mit zugeordneten Kontaktverbinderblechen (11) verschweißt sind.

6. Verfahren zur Herstellung eines prismatischen Akkumulators (1) nach einem der vorhergehenden Ansprüche, **gekennzeichnet durch** die Schritte von:
- Erstellen einer elektrischen Verbindung zwischen jeweils an den gegenüberliegenden Seiten einer Zwischenwand (10) angeordneten Kontaktverbinderblechen (11) **durch** die Zwischenwand (10) hindurch;
- Anordnen von Plattenstapeln (5) in die **durch** die Zwischenwände (10) gebildeten Zellgefäße (8);
- Verschweißen der elektrischen Kontakte der Plattenstapel (5) mit den Kontaktverbinderblechen (11);
- Verschließen des Gehäuses (9) derart, dass die Zellgefäße (8) und das Gehäuse (9) abgedichtet sind; und
- zum Verschließen des Gehäuses (9) wird eine eine flächenmäßig größte Gehäuseseite des Gehäuses (9) abdeckende Frontplatte (4) auf die Seitenkanten der integral mit dem Gehäuse (9) geformten Zwischenwände (10) und Außenwände des Gehäuses (9) aufgesetzt und mit den Seitenkanten dicht verschweißt ist.

7. Verfahren nach Anspruch 6, **gekennzeichnet durch** Durchsetzfügen der Kontaktverbinderbleche (11) **durch** kaltes Flächenverpressen zur elektrischen Verbindung **durch** die jeweilige Zwischenwand (10) hindurch, wobei die Zwischenwand (10) an den Verbindungsstellen gelocht ist.

8. Verfahren nach einem der Ansprüche 6 bis 7, **gekennzeichnet durch** Verschweißen von Ableiterblechen (7) der Plattenstapel (5) mit zugeordneten Kontaktverbinderblechen (11), wobei die positiven Elektrodenplatten (6) eines Plattenstapels (5) an einer ersten Seitenkante mit einem ersten Ableiterblech (7a) verschweißt und die negativen Elektrodenplatten (6) des Plattenstapels (5) an der gegenüberliegenden Seite der Seitenkante mit einem zweiten Ableiterblech (7b) verschweißt werden.

9. Verfahren nach einem der Ansprüche 6 bis 8, **gekennzeichnet durch** Herstellen von Lötverbindungen an den Außenkanten der Schweißverbindung zwischen den Kontakten (7) des Plattenstapels (5) und zugeordneten Kontaktverbinderblechen (11).

## Claims

1. A prismatic accumulator (1) having a housing (9) comprising a plurality of cell containers (8) separated from one another by electrically insulating partitions (10) and having plate stacks (5) formed from stacked electrode plates (6), wherein each of the cell containers (8) accommodates a plate stack (5), wherein a contact connector plate (11) extends along each partition (10) and is electroconductively interconnected through the partition (10) to an oppositely disposed contact connector plate (11), and the contacts (7) of the plate stacks (5) are electroconductively connected to the associated contact connector plates (11),
**characterized in that**
a front cover (4) of the housing (9) covering the largest side of the housing (9) is set onto the side edges of the partitions (10) and side walls of the housing (9) and sealed thereto by welding.

2. The prismatic accumulator (1) according to claim 1,
**characterized in that**
the contact connector plates (11) are electroconductively connected multiple times over their length to an associated contact connector plate (11) arranged on the opposite side of the partition (10).

3. The prismatic accumulator (1) according to claim 1 or 2,
**characterized in that**
the electrical connection of associated contact connector plates (11) is a cold-surface-pressed clinch joint.

4. The prismatic accumulator (1) according to any one of the preceding claims,
**characterized in that**
the contacts (7) of the plate stacks (5) are welded to the associated contact connector plates (11) and constitute soldered joints on the outer edges of the welded joint.

5. The prismatic accumulator (1) according to any one of the preceding claims,
**characterized in that**
the side edges of the positive electrode plates (6) of a plate stack (5) are welded to a first discharging plate (7a) and the side edges of the negative electrode plates (6) of the plate stack (5) at the opposite end of the battery stack are welded to a second discharging plate (7b) and that the discharging plates (7a, 7b) are welded to associated contact connector plates (11).

6. A method for producing a prismatic accumulator (1) according to any one of the preceding claims, **characterized by** the steps of:
- establishing an electrical connection between contact connector plates (11) respectively arranged on opposite sides of a partition (10) through said partition (10);
- arranging plate stacks (5) in the cell containers (8) formed by the partitions (10);
- welding the electrical contacts of the plate stacks (5) to the contact connector plates (11);
- closing the housing (9) such that the cell containers (8) and the housing (9) are sealed; and
- closing the housing (9) by setting a front panel (4) onto the side edges of the partitions (10) which are integrally formed with the housing (9) and onto the outer walls of the housing (9) and sealing same thereto by welding.

7. The method according to claim 6,
**characterized by**
clinching the contact connector plates (11) by means of cold surface pressing for the electrical connection through the respective partition (10), wherein the partition (10) is perforated at the connecting points.

8. The method according to one of claims 6 or 7,
**characterized by**
welding discharging plates (7) of the plate stack (5) to associated contact connector plates (11), wherein the positive electrode plates (6) of a plate stack (5) are welded at a first side edge to a first discharging plate (7a) and the negative electrode plates (6) of the plate stack (5) at the opposite side of the side edge are welded to a second discharging plate (7b).

9. The method according to any one of claims 6 to 8,
**characterized by**
producing soldered joints on the outer edges of the welded joint between the contacts (7) of the plate stack (5) and the associated contact connector plates (11).

## Revendications

1. Accumulateur prismatique (1) comprenant un boîtier (9), qui possède une pluralité de récipients cellulaires (8) séparés les uns des autres par des parois intermédiaires (10) électriquement isolantes, et comprenant des empilements de plaques (5) formés de plaques électrodes (6) empilées, dans lequel un empilement de plaques (5) est reçu dans chacun des récipients cellulaires (8), dans lequel des tôles de jonction de contact (11) s'étendent respectivement le long des parois intermédiaires (10), tôles qui sont reliées mutuellement de manière électriquement conductrice en traversant la paroi intermédiaire (10) à des tôles de jonction de contact (11) opposées à une paroi intermédiaire (10), et les contacts (7) de l'empilement de plaques (5) sont reliés de manière électriquement conductrice avec les tôles de jonction de contact (11) associées,
**caractérisé en ce qu'un**
couvercle frontal (4) du boîtier (4), qui recouvre un côté du boîtier (9) qui présente la plus grande surface, est posé sur les arêtes latérales des parois intermédiaires (10) et des parois latérales du boîtier (9) et est soudé de manière étanche avec celles-ci.

2. Accumulateur prismatique (1) selon la revendication 1,
**caractérisé en ce que**
les tôles de jonction de contact (11) sont reliées de manière électriquement conductrice plusieurs fois avec une tôle de jonction de contact (11) associée qui est agencée sur le côté opposé de la paroi intermédiaire (10).

3. Accumulateur prismatique (1) selon la revendication 1 ou 2,
**caractérisé en ce que**
la jonction électrique de tôle de jonction de contact associé (11) est une jonction à interpénétration obtenu par pressage surfacique à froid.

4. Accumulateur prismatique (1) selon l'une des revendications précédentes,
**caractérisé en ce que**
les contacts (7) de l'empilement de plaques (5) sont soudés avec les tôles de jonction de contact associées (11) et **en ce qu'**il s'agit de jonctions brasées sur les arêtes extérieures de la liaison soudée.

5. Accumulateur prismatique (1) selon l'une des revendications précédentes,
**caractérisé en ce que**
les arêtes latérales des plaques électrodes positives (6) d'un empilement de plaques (5) sont soudées avec une première tôle de dérivation (7a) et, à l'extrémité opposée de l'empilement de batterie, les arêtes latérales des plaques électrodes négatives (6) de l'empilement de plaques (5) sont soudées avec une seconde tôle de dérivation (7b), et **en ce que** les tôles de dérivations (7a, 7b) sont soudées avec des tôles de jonction de contact associées (11).

6. Procédé pour la fabrication d'un accumulateur prismatique (1) selon l'une des revendications précédentes, **caractérisé par** les étapes consistant à:
- établir une jonction électrique entre des tôles de jonction de contact (11) respectivement agencées sur des côtés opposés d'une paroi intermédiaire (10) en traversant la paroi intermédiaire (10);
- agencer des empilements de plaques (5) dans les récipients cellulaires (8) formés par les parois intermédiaires (10);
- souder les contacts électriques de l'empilement de plaques (5) avec les tôles de jonction de contact (11);
- fermer le boîtier (9) de telle façon que les récipients cellulaires (8) et le boîtier (9) sont étanchés; et
- pour fermer le boîtier (9) on pose une plaque frontale (4), qui recouvre un côté du boîtier (9) présentant la plus grande surface, sur les arêtes latérales des parois intermédiaires (10), formées intégralement avec le boîtier (9), et des parois extérieures du boîtier (9), et on la soude de manière étanche avec les arêtes latérales.

7. Procédé selon la revendication 6,
**caractérisé par**
un assemblage des tôles de jonction de contact (11) en interpénétration par pressage surfacique à froid pour établir une jonction électrique à travers la paroi intermédiaire respective (10), ladite paroi intermédiaire (10) étant trouée au niveau des emplacements de jonction.

8. Procédé selon l'une des revendications 6 à 7,
**caractérisé en ce que**
l'on soude des tôles de dérivation (7) de l'empilement de plaques (5) avec des tôles de jonction de contact associées (11), de sorte que l'on soude les plaques électrodes positives (6) d'un empilement de plaques (5) à une première arête latérale avec une première tôle de dérivation (7a) et que l'on soude les plaques électrodes négatives (6) de l'empilement de plaques (5) sur le côté opposé de l'arête latérale avec une seconde tôle de dérivation (7b).

9. Procédé selon l'une des revendications 6 à 8,
**caractérisé en ce que**
l'on réalise des jonctions brasées au niveau des arêtes extérieures de la liaison soudée entre les contacts (7) de l'empilement de plaques (5) et les tôles de jonction de contact associées (11).
